# EUROPEAN PATENT APPLICATION

(11) **EP 4 852 038 A1**
(43) Date of publication of application: **09.12.2026**
(21) Application number: 25771949.2
(22) Date of filing: 12.03.2025
(51) Int. Cl.: H01G 9/035, H01G 9/00, H01G 9/042, H01G 9/045, H01G 9/052, H01G 9/055, H01G 9/145

(54) **ELECTROLYTIC CAPACITOR, AND METHODS FOR MANUFACTURING AND USING ELECTROLYTIC CAPACITOR**

(30) Priority: 14.03.2024 JP 2024040238; 25.09.2024 JP 2024166579
(71) Applicant: Nippon Chemi-Con Corporation, Tokyo 141-8605 (JP)
(72) Inventor: HATAE, Tatsuru, Tokyo 141-8605 (JP); KOSEKI, Kazuya, Tokyo 141-8605 (JP); NAGAHARA, Kazuhiro, Tokyo 141-8605 (JP)
(74) Representative: AWA Sweden AB
(86) International application number: PCT/JP2025/009421
(87) International publication number: WO 2025/192665

(57) **Abstract**

An electrolytic capacitor that can suppress the generation of hydrogen gas is provided. The electrolytic capacitor includes an anode body formed of a valve metal and having a dielectric film, a cathode body including a foil formed of a valve metal and a carbon layer on the foil, and an electrolytic solution interposed between the anode body and the cathode body. A V-I characteristic of the anode body has a first voltage range in which a current density proportionally increases as a voltage increases and a second voltage range in which a current density exponentially increases as a voltage increases A polarization curve of the cathode body resulting from an electrochemical polarization has a first potential range in which a reduction of a dissolved oxygen is dominant and a second potential range in which a ratio of a reduction reaction of a hydrogen ion is higher than the first potential range. In the V-I characteristic the anode body, a rated voltage of the electrolytic capacitor is set within the first voltage range, and a potential of the cathode body is within the first potential range in a current density range of leakage current of the electrolytic capacitor.

## Description

### FIELD OF INVENTION

The present disclosure relates to an electrolytic capacitor and a method for manufacturing and using the electrolytic capacitor.

### BACKGROUND

Electrolytic capacitors include valve metals, such as tantalum or aluminum, as an anode foil and a cathode foil. A surface of the anode foil is enlarged by making the valve metal into a sintered body or a shape such as an etching foil, and the enlarged surface has a dielectric film thereon. Electrolytic solution is interposed between the anode foil and the cathode foil. The electrolytic solution closely contacts the uneven surface of the anode foil and acts as a true cathode.

The electrolytic solution repairs deteriorated portions, such as deteriorations and damages, of the dielectric film formed on the anode foil by leakage current. However, hydrogen gas is generated at the cathode side due to film repairing of the dielectric film by leakage current. That is, the anode reaction expressed by the following chemical reaction formula (1) occurs at the anode side during film repairing by leakage current. Then, the cathode reaction expressed by the following chemical reaction formula (2), in which electrons generated in the anode reaction are accepted and reduce hydrogen ions, occurs at the cathode side during film repairing by leakage current. Atomic hydrogen generated by the chemical reaction formula (2) bonds as expressed by the following chemical formula (3), generating hydrogen gas.

2Al + 3H₂O → Al₂O₃ + 6H⁺ +6e⁻ ··· (1)

6H⁺ + 6e⁻ → 6H_{ad} ··· (2)

6H_{ad} → 3H₂ ··· (3)

Hydrogen gas raises the internal pressure of the electrolytic capacitor, potentially causing swelling of a casing which houses a capacitor element therein, swelling of a sealing body which seals the capacitor element, and opening of a pressure relief valve provided in the electrolytic capacitor. If leakage current increases at the anode side and charge transfer on the surface of the electrode at the anode side becomes more drastic, the reaction rate at the cathode side also increases according to Faraday's law, increasing the generation amount of hydrogen gas at the cathode side.

In particular, in recent years, larger capacitance is demanded for the electrolytic capacitors for middle and high voltage applications of 100 V or more. In other words, thinning of dielectric films while maintaining the withstand voltage is demanded for the electrolytic capacitors. However, when the dielectric films become thinner, leakage current tends to increase, causing a problem that the generation amount of hydrogen gas increases.

Nitro compounds may be added to the electrolytic solution. Nitro compounds are reduced at the cathode side and react with hydrogen ions. Therefore, nitro compounds suppress the generation of hydrogen gas. However, since the withstand voltage of the electrolytic capacitors may decrease depending on the type of nitro compounds, the use of nitro compounds is limited. Furthermore, since nitro compounds are reduced at the cathode side over time, the hydrogen gas suppression performance deteriorates.

### PRIOR ART DOCUMENT

### PATENT DOCUMENT

Patent Document 1: JP2017-34030A

### SUMMARY OF INVENTION

### PROBLEMS TO BE SOLVED BY INVENTION

A new method to preferably suppress hydrogen gas is demanded for the electrolytic capacitors. The present disclosure is proposed to address the above problem, and the objective is to provide an electrolytic capacitor that can suppress generation of hydrogen gas, and a method for manufacturing and using the electrolytic capacitors.

### MEANS TO SOLVE THE PROBLEM

To address the above problems, an electrolytic capacitor of the present embodiment includes:
an anode body formed of a valve metal and having a dielectric film;
a cathode body including a foil formed of a valve metal and a carbon layer on the foil;
an electrolytic solution interposed between the anode body and the cathode body;
an element including the anode body, the cathode body and the electrolytic solution; and
a moisture within the element,
in which:
   a V-I characteristic of the anode body has a first voltage range in which a current density proportionally increases as a voltage increases and a second voltage range in which a current density exponentially increases as a voltage increases,
   in the V-I characteristic of the anode body, a rated voltage of the electrolytic capacitor is set within the first voltage range, and
   an amount of the moisture is 1.49 wt% or more of a total liquid content within the element including the electrolytic solution.

A polarization curve of the cathode body resulting from an electrochemical polarization may have a first potential range in which a reduction of a dissolved oxygen is dominant and a second potential range in which a ratio of a reduction reaction of a hydrogen ion is higher than the first potential range,
a potential of the cathode body may be set within the first potential range in a current density range of leakage current of the electrolytic capacitor,
the first potential range in which the reduction of the dissolved oxygen is dominant may be a range in which a current generated due to a cathode reaction reducing the dissolved oxygen in the electrolytic solution is larger than a current generated due to a cathode reaction reducing the hydrogen ion, and
the second potential range in which the ratio of the reduction reaction of the hydrogen ion may be a range in which the current generated due to the cathode reaction reducing the hydrogen ion is larger than the current generated due to the cathode reaction reducing the dissolved oxygen.

The first voltage range in which the current density proportionally increases as the voltage increases may be a range in which the moisture is electrolyzed on a surface of the anode body to supply a dissolved oxygen within the electrolytic solution, and the second voltage range in which the current density exponentially increases as the voltage increases may be a range in which the valve metal and the moisture react with each other to oxidize the valve metal and generate the hydrogen ion.

The anode body may include a powder layer formed by laminating a powder of the valve metal.

To address the above problems, a method of manufacturing an electrolytic capacitor includes:
a formation process of forming a cathode body including a foil formed of a valve metal and a carbon layer on the foil;
a formation process of forming an anode body;
a process of preparing an electrolytic solution containing the moisture in an amount of 1.49 wt% or more of a total liquid content within an element including the anode body, the cathode body, and the electrolytic solution;
a process of interposing the electrolytic solution between the anode body and the cathode body; and
a process of setting a rated voltage of the electrolytic capacitor to a first voltage range among the first voltage range in which a current density proportionally increases as a voltage increases and a second voltage range in which a current density exponentially increases as a voltage increases.

The process of forming the anode body may include a process of forming a powder layer formed by laminating a powder of the valve metal.

To address the above problems, a method of using an electrolytic capacitor of the present embodiment is characterized in that:
the electrolytic capacitor includes:
   an anode body formed of a valve metal and having a dielectric film;
   a cathode body including a foil formed of a valve metal and a carbon layer on the foil;
   an electrolytic solution interposed between the anode body and the cathode body;
   an element including the anode body, a cathode body and the electrolytic solution; and
   a moisture within the element,
a V-I characteristic of the anode body has a first voltage range in which a current density proportionally increases as a voltage increases and a second voltage range in which a current density exponentially increases as a voltage increases,
an amount of the moisture is 1.49 wt% or more of a total liquid content within the element including the electrolytic solution, and
the electrolytic capacitor is used within the first voltage range of the V-I characteristic of the anode body.

The anode body may include a powder layer formed by laminating a powder of the valve metal.

### EFFECT OF INVENTION

According to the present disclosure, dissolved oxygen can be supplied within the electrolytic solution at the anode side, and the generation of hydrogen gas can be suppressed.

### BRIEF DESCRIPTION OF DRAWINGS

Fig. 1 is a graph illustrating the V-I characteristic of the anode body.
Fig. 2 is a graph illustrating the polarization curve of the cathode body in which the carbon layer is laminated.
Fig. 3 is a graph illustrating the polarization curve of the cathode body in which the carbon layer is not laminated.
Fig. 4 is a graph illustrating the relationship between the V-I characteristic of the anode bodies and the rated voltage in each Example and Comparative Example.
Fig. 5 is a graph illustrating the generation amount of hydrogen gas in Examples 1 and 2 and Comparative Examples 1 to 6.
Fig. 6 is a graph illustrating the ratio of the increase in volume in Examples 3 to 6 and Comparative Examples 7 to 12 relative to the theoretical value.
Fig. 7 is a graph illustrating the ratio of the increase in volume in Example 7 and Comparative Examples 13 relative to the theoretical value.

### EMBODIMENTS

Hereinafter, a cathode body and an electrolytic capacitor according to embodiments of the present disclosure will be described. Note that the present disclosure is not limited to the following embodiments.

### (Overall Configuration)

An electrolytic capacitor is a passive element that gains capacitance by dielectric polarization of a dielectric film and stores and discharges electric charge. This electrolytic capacitor includes an anode body in which dielectric film is formed on a surface thereof, and a cathode body. The anode body and the cathode body are arranged to face each other. An electrolytic solution is filled between the dielectric film of the anode body and the cathode body. The electrolytic solution adheres to the dielectric film and acts as a true cathode.

Furthermore, a separator is interposed between the anode body and the cathode body to prevent short-circuit of the anode body and the cathode body and to hold the electrolytic solution. If the electrolytic solution is gelled and the gel electrolyte layer can electrically isolate the anode body and the cathode body and can keep its shape on its own, the separator can be omitted from the configuration of the electrolytic capacitor.

For example, the electrolytic capacitor is a wound-type. An element of the wound-type electrolytic capacitor is a wound body. The anode body and the cathode body are strip-shaped foil bodies, and the wound body has a cylindrical shape formed by winding a laminate of the anode body, the cathode body, and the separator multiple times into a roll. The strip-width direction of the anode body and the cathode body and the central axis of the wound body are aligned, and the foil are wound so that the strip-longitudinal direction thereof is rounded. Then, the wound body is impregnated with the electrolytic solution to form the element including the anode body, the cathode body, the separator, and the electrolytic solution.

The electrolytic capacitor may also be a laminated-type. In the laminated-type electrolytic capacitor, flat plates of the anode body and the cathode body are alternately laminated via the separator. Then, this laminate is impregnated with the electrolytic solution to form the element including the anode body, the cathode body, the separator, and the electrolytic solution.

The element is housed in a casing. An opening of the casing is sealed using a sealing body. The opening of the casing is bent and crushed inward by crimping, so that the sealing body adheres to the casing. The casing is formed of aluminum, aluminum alloy containing manganese, or stainless steel, and for example is a cylinder with a bottom and an opening at the other end. A pressure relief valve is formed on the bottom of the casing and opens when the internal pressure of the casing exceeds the set pressure.

Furthermore, for example, the casing may be a laminate film, other than a cylinder with an opening and a bottom. In addition, the casing may be formed by molding resins such as heat-resistance resins and insulation resins on the element or by forming a thin film of said resins on the element using methods such as dip coating and printing.

Note that, lead terminals are connected to the anode body and the cathode body, respectively. The lead terminal is electrically and mechanically connected to the anode body and the cathode body by stitching, cold-welding, ultrasonic welding, or laser welding, etc. The lead terminal is an electrical conductor that protrudes from the element and electrically connects the electrolytic capacitor and a mounting board.

### (Electrode)

In such an electrolytic capacitor, the anode body is a foil body formed of a valve metal. The valve metal is aluminum, tantalum, niobium, niobium oxide, titanium, hafnium, zirconium, zinc, tungsten, bismuth, and antimony, etc. The purity of the valve metal of the anode body is desirably 99.9% or more, and impurities such as silicon, iron, copper, magnesium, and zinc may be contained.

The surface of the anode body is enlarged as a molding formed by molding powder of the valve metal, a sintered body obtained by sintering the molding, an etching foil obtained by etching a stretched foil, a vapor-deposited body in which powder of the valve metal is vapor-deposited on the surface of the stretched foil, or a sintered body in which powder of the valve metal is molded and sintered on the surface of the stretched foil. That is, the anode body may be either a powder laminated foil in which a powder layer of the agglomerated powder body of the valve metal is used as an enlarged surface layer, or an etching foil in which the surface of the elongated foil is etched. That is, the enlarged surface layer is formed by tunnel-shaped pits, spongy pits, or voids between dense powder.

The tunnel-shaped etching pits are holes dug in the thickness direction of the foil. Typically, the tunnel-shaped etching pits are formed by applying DC current on the foil body in an aqueous acidic solution in which halogen ions are present, such as hydrochloric acid. Furthermore, the tunnel-shaped etching pits are enlarged by applying DC current on the foil body in an aqueous acidic solution such as nitric acid. The spongy pits make a spongy layer with a series of fine spatial voids. The spongy etching pits are formed by applying AC current on the foil body in an aqueous acidic solution in which halogen ions are present, such as hydrochloric acid.

The powder is powder of the valve metal that is the same as or different from the foil body. For example, the powder is obtained by milling, atomizing, melt-spinning, rotating disk, and rotating electrode, etc. The atomizing may be any of water atomizing, gas atomizing, or water-gas atomizing. When forming the powder layer by sintering, the powder is made into a paste using a binder or a solvent, applying the paste on the foil body, drying the foil body, and heating and sintering the foil body in vacuum or in reduction atmosphere. When forming the powder layer by vapor-deposition, the powder layer is produced by resistance heating vapor-deposition or electron beam heating vapor-deposition. That is, the vapor-deposited powder layer is formed by heating and evaporating the valve metal same as or different from the foil body using resistive heat and electron beam energy, and depositing vapor of particles of the valve metal on the surface of the foil body.

The dielectric film is formed on an uneven surface of the enlarged surface layer. Typically, the dielectric film is an oxide film formed on the uneven surface layer of the enlarged surface layer, and when the anode body is made of aluminum, the dielectric film is an aluminum oxide layer obtained by oxidizing the uneven surface layer of the enlarged surface layer. In the chemical conversion treatment to form the dielectric film, voltage is applied to the anode foil in a chemical conversion solution to achieve the desired withstand voltage. The chemical conversion solutions are solutions without halogen ions, and for example are phosphoric acid-based chemical conversion solutions such as ammonium dihydrogen phosphate, boric acid-based chemical conversion solutions such as ammonium borate, and adipic acid-based chemical conversion solutions such as ammonium adipate. Note that, in the chemical conversion treatment to form the dielectric film, it is preferable to form the dielectric film with the thickness of 0.9 to 1.5 nm to obtain the withstand voltage of 1 V.

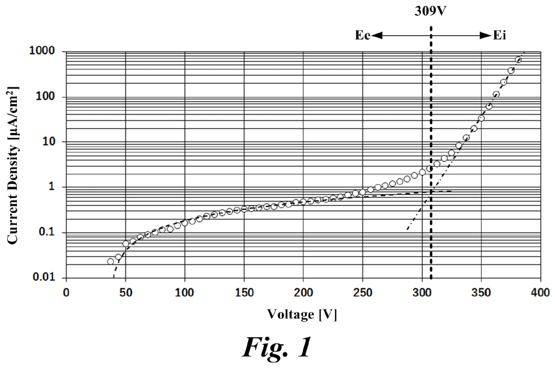

This anode body has specific V-I characteristics. The V-I characteristic is a change in current density (µA/cm²) when voltage (V) is swept from low voltage to high voltage. When voltage applied to the anode body is gradually increased, the V-I characteristic illustrated in Fig. 1 can be obtained. As illustrated in Fig. 1, the current density proportionally increases as the voltage increases according to Ohm's law up to the predetermined voltage. A first voltage range in which the current density proportionally increases as the voltage increases is referred to as an electron current region Ee. After this electron current region, a region in which the current density exponentially increases as the voltage increases appears. A second voltage range in which the current density exponentially increases as the voltage increases is referred to as an ion current region Ei.

When the anode body is used within the electron current region Ee, in other words, when the rated voltage of the electrolytic capacitor is within the range of the electron current region Ee, as indicated by the following chemical formula (4), in the anode body, the moisture is electrolyzed on the surface of the dielectric film, generating oxygen, and oxygen dissolves in the electrolytic solution and becomes the dissolved oxygen. The electrons generated due the oxidation of the moisture are supplied from the anode body to the cathode body through an external circuit. The electron current region Ee may be regarded as a region in which the generation of dissolved oxygen is dominant.

2H₂O → 4H⁺ + O₂ +4e⁻ ··· (4)

On the other hand, when the anode body is used within the ion current region Ei that is the second voltage range, in other words, when the rated voltage of the electrolytic capacitor is within the range of the ion current region Ei, as indicated by the following chemical formula (1), in the anode body, the valve metal of the anode body and the moisture react with each other, oxidizing the valve metal, so that the dielectric film grows. When the dielectric film grows, as indicated by the above chemical reaction formula (1), oxygen is not generated like the electron current region Ee that is the first voltage range, and only hydrogen ions are generated. The electrons generated due to the oxidation of valve metal are supplied to the cathode body through an external circuit, and also, oxygen is not supplied to the cathode body like the electron current region Ee and hydrogen ions are dominantly supplied through the electrolytic solution. The ion current region Ei that is the second voltage range may be regarded as a region in which the generation of dissolved oxygen is small or none.

Accordingly, this anode body has the V-I characteristic in which the rated voltage of the electrolytic capacitor is within the electron current region Ee. In other words, the anode body has the V-I characteristic in which the rated voltage is within the first voltage range in which the current density proportionally increases as the voltage increases. Therefore, the anode body supplies oxygen in the electrolytic solution. Here, the rated voltage is 0.7 times to 0.9 times the withstand voltage of the anode body.

Note that the electron current region Ee and the ion current region are distinguished as follows. That is, the voltage at the intersection of the V-I line or the best fit line obtained using the least square method on the linear graph of the electron current region Ee, and the V-I line or the best fit line obtained using the least square method on the semi-logarithmic graph of the ion current region Ei is defined as the boundary between the electron current region Ee that is the first voltage range and the ion current region Ei that is the second voltage range.

The V-I characteristic should be measured using a method according to Japan Electronics and Information Technology Industries Association (JEITA) standard EIAJ RC-2364A,"Test Method for Electrode Foil of Aluminum Electrolytic Capacitor". For example, using a measurement tank such as SUS304 as a counter electrode, the anode body that has been cut into the predefined size is immersed in the predefined Vt measurement solution for each foil withstand voltage range of the anode body. With an ammeter and a voltmeter connected, DC voltage is applied while sweeping the voltage. Each voltage is maintained for the predefined period to ensure that charging current to the anode body does not affect the measurement value, and the current value at the end point is used.

Next, the cathode body includes a cathode foil formed of the valve metal. The purity of the cathode foil is desirably 99% or more, and impurities such as silicon, iron, copper, magnesium, and zinc may be included. For example, aluminum material with the temper designation of H defined in JIS standard H0001, that is, H material, and aluminum material with the temper designation of O defined in JIS standard H0001, that is, O material, may be used as a cathode foil. When highly rigid metal foil formed of H material is used, deformation of the cathode foil due to press processing can be suppressed.

The cathode foil is formed by elongating the valve metal into a foil-shape. An enlarged surface layer may be formed on a surface of the cathode foil. The enlarged surface layer is formed by tunnel-shaped pits, spongy pits, or voids between dense powder. The enlarged surface layer of the cathode foil is formed by chemical etching, sandblasting and the like or by sintering or vapor-deposition metal particles and the like on the metal foil, other than electrolytic etching.

An oxide film may be formed on the enlarged surface layer naturally or intentionally. The natural oxide film is formed when the cathode foil reacts with oxygen in the air, and a chemical conversion film is a thin oxide film of 1 to 10 V that is intentionally formed by chemical conversion treatment of applying voltage to the cathode foil in a solution without halogen ions such as an aqueous solution of adipic acid or boric acid.

The cathode body includes a carbon layer in addition to the cathode foil. The carbon layer is laminated on the cathode foil. The carbon layer is laminated on one or both surfaces of the cathode foil. The carbon layer contains carbon material. Furthermore, the carbon layer may contain metals such as titanium, and metal nitrides or metal carbides such as titanium nitride, titanium carbide, or aluminum carbide, in addition to the carbon material. A plurality of layers may be laminated in the carbon layer. Furthermore, the carbon layer may be located on the outermost surface of the cathode body, a conductive layer containing other conductive material may be further laminated on the carbon layer which is located on the surface of the cathode foil, and the carbon layer may be interposed between conductive layers containing other conductive material.

The carbon material is fibrous carbon, carbon powder, or mixtures thereof. The carbon material may be fibrous carbon and carbon powder treated with porous treatment, such as activation treatment and opening treatment forming pores. For example, the carbon powder may be natural plant tissues such as coconut shells, synthetic resins such as phenol, activated carbon made from fossil fuel such as coal, coke, pitch, and the like, carbon black such as Ketjen black, acetylene black, and channel black, carbon nanohorn, amorphous carbon, natural graphite, artificial graphite, graphitized Ketjen black, mesoporous carbon, etc. For example, the fibrous carbon is carbon nanotubes or carbon nanofibers, etc. The carbon nanotubes may be single-walled carbon nanotubes with a single layer of a graphene sheet, or multi-walled carbon nanotubes (MWCNTs) in which two or more layers of graphene sheets are curled up on the same axis and a tube wall forms multiple layers.

The carbon material is attached on the cathode foil by coating, vapor-deposition, or thermal treatment, etc. In the coating, a slurry containing the carbon material, a binder, and a solvent is applied on the cathode foil by slurry casting, doctor blading, or spraying, and the like, the cathode foil is dried, and the cathode foil and the carbon layer are adhered by pressing as necessary. In the thermal treatment, powder of the carbon material is attached on the surface of the cathode foil and is sintered.

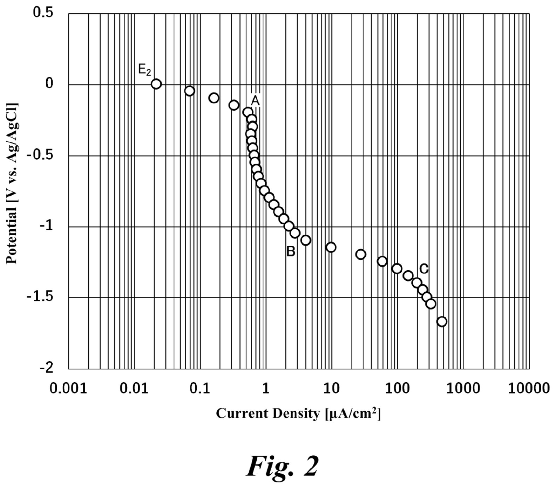

This cathode body has a specific polarization curve. Fig. 2 is a graph illustrating the polarization curve of this cathode body, in which the vertical axis indicates the potential (vs. Ag/AgCl), and the horizontal axis indicates the logarithmic value of the current density. As illustrated in Fig. 2, the polarization curve of this cathode body has an approximately S-shaped profile, and has an E₂A region that is the first potential range in which the reduction of the dissolved oxygen is active and dominant, an AB region in which the current had reached the diffusion limit current of dissolved oxygen, and a BC region that is the second potential range in which the ratio of the reduction reaction of hydrogen ions is higher compared with the E₂A region. For example, this polarization curve with an approximately S-shaped profile is adjusted by the thickness of the carbon layer, the density of the carbon material, the type of the carbon material, the amount and type of the surface functional groups of the carbon material.

In the E₂A region that is the first potential range in which the reduction of dissolved oxygen is active and dominant, the reduction reaction of the dissolved oxygen as shown in the following chemical formula (5) is dominantly occurring compared with the reduction reaction of hydrogen ions in the above chemical reaction formula (3). In other words, in the E₂A region, the reduction reaction of dissolved oxygen is dominant and the reduction reaction of hydrogen ions is suppressed. In the BC region that is the second potential range in which the ratio of the reduction reaction of hydrogen ions is higher compared with the E₂A region, the ratio of the reduction reaction of hydrogen ions in the above chemical formula (3) is higher than the E₂A region and becomes dominant over the reduction reaction of dissolved oxygen in the above chemical formula (5).

O₂ + 2H₂O + 4e⁻ → 4OH⁻ ··· (5)

The reduction reaction of dissolved oxygen being dominant over the reduction reaction of hydrogen ions means that the current generated by the cathode reaction reducing the dissolved oxygen is larger than the current generated by the cathode reaction reducing hydrogen ions in the E₂A region that is the first potential range. Furthermore, the ratio of the reduction reaction of hydrogen ions being higher than the E₂A region and becoming dominant over the reduction reaction of dissolved oxygen means that the current generated by the cathode reaction reducing hydrogen ions is larger than the current generated by the cathode reaction reducing the dissolved oxygen.

Furthermore, in the typical range of the current density of leakage current of the electrolytic capacitor such as 0.1 µA/cm² to 0.3 µA/cm², the potential of this cathode body is adjusted so that the potential falls within the E₂A region that is the first potential range in which the reduction of dissolved oxygen is active and dominant. For example, for the potential corresponding to the range of the current density of leakage current of the electrolytic capacitor, the carbon layer forming the cathode foil may be adjusted while checking the polarization curve and the potential of the cathode body when used at the rated voltage and guaranteed temperature. Using the cathode body as a working electrode and a silver-silver chloride electrode or a platinum electrode as a reference electrode, the polarization curve of the cathode body and the potential of the cathode body when used at the rated voltage and guaranteed temperature are measured. Then, for example, the coverage ratio of the carbon layer on the cathode foil, the surface area of the carbon layer, or the type of the carbon material within the carbon layer, the content ratio of the carbon material, and the type and amount of the surface functional groups of the carbon layer may be adjusted.

The action when the electrolytic capacitor is assembled using said anode body and cathode body is as follows. That is, when the polarization curve has the E₂A region, the AB region, and the BC region, in the cathode body in which the range of leakage current corresponds to the E₂A region that is the first potential range, the dissolved oxygen is present in the electrolytic solution, so that the reduction reaction of dissolved oxygen is dominant and the reduction reaction of hydrogen ions is suppressed. Therefore, the generation of hydrogen gas is suppressed.

However, when the dissolved oxygen in the electrolytic solution is consumed and depleted, the diffusion limit current (AB region) of the dissolved oxygen decreases and the reduction reaction of dissolved oxygen becomes less active, and instead, the reduction reaction of hydrogen ions becomes more active. Accordingly, the generation of hydrogen gas increases. Therefore, a supply source to generate oxygen and supply the dissolved oxygen to the electrolytic solution is required. If the dissolved oxygen is supplied continuously, the condition in which the reduction reaction of dissolved oxygen is dominant will be maintained, suppressing the reduction reaction of hydrogen ions and suppressing the generation of hydrogen gas.

To address this problem of the supply source, the anode body has the V-I characteristic in which the rated voltage of the electrolytic capacitor falls within the electron current region Ee that is the first voltage range in which the current density proportionally increases as the voltage increases. Therefore, the moisture is electrolyzed on the surface of the anode body, generating oxygen. Accordingly, this anode body supplies the dissolved oxygen to the electrolytic solution.

Thus, the risk that the dissolved oxygen in the electrolytic solution depletes is reduced, and the reduction reaction of dissolved oxygen at the cathode side becomes dominant, suppressing the reduction reaction of hydrogen ions and suppressing the generation of hydrogen gas within the electrolytic capacitor.

### (Electrolytic Solution)

The electrolytic solution is an electrolytic solution in which a solute is dissolved in a solvent, and in which additives are added as necessary. The electrolytic solution is not limited and may be any known electrolytic solution if oxygen easily dissolves therein and moisture is contained. However, the amount of the moisture should be 1.49 wt% or more of a total liquid content within the element.

When the amount of the moisture is 1.49 wt% or more of the total liquid content within the element, water is electrolyzed as indicated by the above chemical reaction formula (4), generating the dissolved oxygen. In other words, if the amount of the moisture is 1.0 wt% or less of the total liquid content within the element, the amount of the dissolved oxygen which is the primary component of the reduction reaction indicated by the above chemical formula (5) becomes insufficient, and as a result, the reduction reaction of dissolved oxygen does not become dominant and the reduction reaction of hydrogen ions occurs more. That is, if the amount of the moisture is 1.0 wt% or less of the total liquid content within the element, hydrogen gas is generated, and when the amount of the moisture is 1.49 wt% or more of the total liquid content within the element, the generation of hydrogen gas is suppressed.

Here, the moisture contained in the electrolytic capacitor is mainly the moisture of the electrolytic solution, however, the moisture in the air may be contaminated during manufacturing of the electrolytic capacitor. Therefore, the liquid content within the element is a liquid component that is extracted by centrifugation from the element which has been taken out from the outer casing, and includes the electrolytic solution and the moisture contaminated during manufacturing of the electrolytic capacitor. Furthermore, the moisture contained within the element includes all moisture contaminated during manufacturing of the electrolytic capacitor, other than the moisture contained in the electrolytic solution.

In a preparation process of the electrolytic solution, the moisture contaminated during manufacturing of the electrolytic capacitor is determined experimentally and empirically, and the amount of the moisture to be contained in the electrolytic solution may be adjusted so that the amount of the moisture is 1.49 wt% or more of the total liquid content within the element.

The solvent other than the moisture may be, for example, protic organic polar solvents or aprotic organic polar solvents, and the solvents may be mixed with the moisture. Typically, the protic polar solvents may be monohydric alcohols, polyhydric alcohols, oxyalcohol compounds, and water, etc. Typically, the aprotic polar solvents may be sulfones, amides, lactones, cyclic amides, nitriles, and sulfoxides, etc.

The monohydric alcohols may be ethanol, propanol, butanol, pentanol, hexanol, cyclobutanol, cyclopentanol, cyclohexanol, and benzyl alcohol, etc. The polyhydric alcohols and oxyalcohol compounds may be ethylene glycol, propylene glycol, glycerin, methyl cellosolve, ethyl cellosolve, methoxypropylene glycol, dimethoxypropanol, etc.

The sulfones may be dimethyl sulfone, ethylmethyl sulfone, diethyl sulfone, sulfolane, 3-methyl sulfolane, and 2,4-dimethyl sulfolane, etc. The amides may be N-methylformamide, N,N-dimethylformamide, N-ethylformamide, N,N-diethylformamide, N-methylacetamide, N,N-dimethylacetamide, N-ethylacetamide, N,N-diethylacetamide, and hexamethylphosphoricamide, etc. The lactones and the cyclic amides may be γ-butyrolactone, γ-valerolactone, δ-valerolactone, N-methyl-2-pyrrolidone, ethylene carbonate, propylene carbonate, butylene carbonate, and isobutylene carbonate, etc. The nitriles may be acetonitrile, 3-methoxypropionitrile, and glutaronitrile, etc. The sulfoxides may be dimethyl sulfoxide, etc.

The solute contained in the electrolytic solution contains anionic components and cationic components, is typically organic acids or salts thereof, inorganic acids or salts thereof, or composite compounds of organic acid and inorganic acid or salts thereof, and may be used alone or in combination of two or more.

The organic acids that become the anionic component as a solute may be carboxylic acid such as oxalic acid, succinic acid, glutaric acid, pimelic acid, suberic acid, sebacic acid, phthalic acid, isophthalic acid, terephthalic acid, maleic acid, adipic acid, benzoic acid, toluyl acid, enanthic acid, malonic acid, 1,6-decandicarboxylic acid, 1,7-octanedicarboxylic acid, azelaic acid, resorcylic acid, phloroglucinic acid, gallic acid, gentisic acid, protocatechuic acid, pyrocatechuic acid, trimellitic acid, and pyromellitic acid, undecanedioic acid, dodecanedioic acid, tridecanedioic acid, t-butyladipic acid, and 11-vinyl-8-octadecene dioic, phenols, and sulfonic acids, etc.

Furthermore, the inorganic acids may be boric acid, phosphoric acid, phosphorous acid, hypophosphorous acid, carbonic acid, and silicic acid, etc. The composite compounds of organic acid and inorganic acid may be borodisalicylic acid, borodioxalic acid, borodiglycolic acid, borodimalonic acid, borodisuccinic acid, borodiadipic acid, borodiazelaic acid, borodibenzoic acid, borodimaleic acid, borodilactic acid, borodimalic acid, boroditartric acid, borodicitric acid, borodiphthalic acid, borodi(2-hydroxy) isobutyric acid, borodiresorcinic acid, borodimethylsalicylic acid, borodinaftoeic acid, borodimandelic acid, and borodi(3-hydroxy) propionic acid, etc.

The cationic components may be ammonium, quaternary ammoniums, quaternized aminidiums, amines, sodium, and potassium, etc. The quaternary ammonium may be tetramethylammonium, triethylethylmethylammonium, and tetraethylammonium, etc. The quaternized amidiniums may be ethyldimethylimidazolinium and tetramethylimidazolinium, etc. The amines may be primary amines, secondary amines, and tertiary amines. The primary amines may be methylamine, ethylamine and propylamine, the secondary amines may be dimethylamine, diethylamine, ethylmethylamine and dibutylamine, and the tertiary amines may be trimethylamine, triethylamine, tributylamine, ethyldimethylamine, and ethyldiisopropylamine, etc.

Note that the anions and cations may be added to the electrolytic solution in a state of ion dissociative salt, or may be separately added to the electrolytic solution as a solute component of acid that is an anion and base that is a cation. The anions and cations may be used alone or in combination of two or more.

Furthermore, other additives may be added to the electrolytic solution. The additives may be complex compounds of boric acid and polysaccharides (mannitol, sorbitol, etc.), complex compounds of boric acid and polyhydric alcohols, borate esters, nitro compounds, phosphate esters, and colloidal silica, etc. These may be used alone or in combination of two or more. The nitro compound suppresses the generation amount of hydrogen gas within the electrolytic capacitor. The nitro compounds may be o-nitrobenzoic acid, m-nitrobenzoic acid, p-nitrobenzoic acid, o-nitrophenol, m-nitrophenol, and p-nitrophenol, etc.

The capacitor element is immersed in the electrolytic solution to impregnate the electrolytic solution in the voids of the capacitor element. To impregnate the electrolytic solution in finer voids, depressurization process or pressurization process may be performed, as necessary. The impregnation process may be repeated multiple times. For example, the interior of the element may be depressurized, and the electrolytic solution may be injected inside the capacitor element while pressurizing the electrolytic solution.

### (Separator)

The separator includes cellulose such as kraft, Manila hemp, esparto, hemp, rayon, and mixed papers thereof, polyester resins such as polyethylene terephthalate, polybutylene terephthalate, polyethylene naphthalates, and derivatives thereof, polytetrafluoroethylene resins, polyvinylidene fluoride resins, vinylon resins, polyamide resins such as aliphatic polyamides, semi-aromatic polyamides, and total aromatic polyamides, polyimide resins, polyethylene resin, polypropylene resin, trimethylpentene resin, polyphenylene sulfide resin, acrylic resin, polyvinyl alcohol resin and the like, and these resins may be used alone or in combination.

The separator may be fibrillated by creating fine fibers branched out from the surface of the original fiber, like fibrillated cellulose, for example. For example, the fibrillation may be performed by beating. The fibrillated fibers intertwine with each other using fibrillated fine fibers, improving the strength of the separator. Accordingly, the separators can be made thinner. Thinning the separator allows for an increase in the length of the anode body and the cathode body per unit volume, improving the capacitance of the electrolytic capacitor.

### (Manufacturing Method)

### (Wound-type)

One example of the method of manufacturing the electrolytic capacitor is as follows. Firstly, in an anode body formation process, the enlarged surface layer is formed on one or both surfaces of the anode foil, and the dielectric film is formed on the surface of the enlarged surface layer by chemical conversion treatment. In a cathode body formation process, the enlarged surface layer is also formed on one or both surfaces of the cathode foil as necessary, and the oxide film is formed on the surface of the enlarged surface layer as necessary. Then, after the cathode body formation process, a carbon layer lamination process is performed to laminate the carbon layer containing the carbon material on the cathode foil. The anode lead wire and the cathode lead wire are electrically or mechanically connected to the anode body and the cathode body.

In an element formation process, the anode body and cathode body are laminated via the separator. In the wound-type, the anode body, the cathode body, and the separator have a long length and are wound to produce a cylindrical wound body. The separator is overlapped so that one end of the separator protrudes from one ends of the anode body and the cathode body. The protruded separator is wound at first so that a core of the wound body follows along the short sides of the anode body and the cathode body, to produce a winding core portion. Then, the long sides of the anode body and the cathode body are wound by rounding them with the winding core portion as a winding shaft.

After the element formation process, restorative chemical conversion process to repair defects in a base metal portion of the valve metal exposed when cutting the anode body and the cathode body into the desired width and in the dielectric film of the anode body caused by physical stresses such as winding. In the restorative chemical conversion process, the wound body is immersed in the chemical conversion solution, and voltage is applied. The chemical conversion solutions may be phosphoric acid-based chemical conversion solutions such as ammonium dihydrogen phosphate, boric acid-based chemical conversion solutions such as ammonium borate, adipic acid-based chemical conversion solutions such as ammonium adipate, and chemical conversion solutions in which boric acid and dicarboxylic acid such as citric acid are mixed, etc. For example, the restorative chemical conversion voltage is preferably 0.1 to 1.2 times the chemical conversion voltage to the anode body. Furthermore, as the voltage application method for the chemical conversion treatment, a method to apply constant voltage from the beginning, or a method to apply voltage increasing stepwise at certain intervals may be selected as appropriate.

In a preparation process, the electrolytic solution is adjusted so that the amount of the moisture is 1.49 wt% or more of the total liquid content within the element. In an impregnation process, the wound body is immersed in the electrolytic solution prepared in the preparation process to impregnate the electrolytic solution to the voids within the wound body. To impregnate the electrolytic solution in finer voids, depressurization process or pressurization process may be performed, as necessary. The impregnation process may be repeated multiple times. For example, the interior of wound body or the laminate may be depressurized, and the electrolytic solution may be injected inside the element while pressurizing the electrolytic solution. The element is housed in the casing and is sealed in the casing by the sealing body. After the element is sealed, aging process is performed to complete the production of the electrolytic capacitor. In the aging process, DC current is applied to the electrolytic capacitor to repair the defects such as in the dielectric film.

### (Laminated Type)

Regarding the laminated-type electrolytic capacitor, in the element formation process, the anode body and the cathode body in flat shapes are laminated with the separator interposed therebetween. After the laminate body is impregnated with the electrolytic solution, the element is covered by a laminate film. Alternatively, the capacitor element is sealed by molding, dip coating, or printing resin such as a heat-resistant resin and an insulating resin. At last, voltage is applied like the wound-type.

Hereinafter, the electrolytic capacitor of the present disclosure will be described in more detail based on the examples. Note that the present disclosure is not limited to the following examples.

### (Examples 1 and 2)

Electrolytic capacitors of Examples 1 and 2 and Comparative Examples 1 and 2 were produced. Firstly, in an anode body formation process and a cathode body formation process, a pair of electrodes was produced using a 3 cm × 4 cm aluminum foil. Surfaces of both electrode bodies were enlarged by etching to form enlarged surface layers. One of the electrodes was the anode body, and the surface thereof was enlarged by DC etching. In the enlargement of the surface of the anode body, DC current was applied to the aluminum foil in an aqueous solution containing hydrochloric acid to form tunnel-shaped etching pits. The other of the electrodes was the cathode body, and the surface thereof was enlarged by AC etching. In the enlargement of the surface of the cathode foil, AC current was applied to the aluminum foil in an aqueous solution containing hydrochloric acid to form spongy etching pits.

Chemical conversion treatment was performed on the anode body to form a dielectric film on the surface of the foil. In a process of the chemical conversion treatment, the chemical conversion treatment was performed on the aluminum foil on which the enlarged surface layer had been formed in an aqueous solution of boric acid to form the dielectric film of 359 V on the surface of the aluminum foil. Furthermore, in the cathode foil, the oxide film of 3 V was formed on the aluminum foil on which the enlarged surface layer had been formed.

The anode body and the cathode body were each ultrasonically connected to tab-shaped lead terminals formed of aluminum. The chemical conversion treatment was performed to form the oxide film on the surface of the lead terminal connected to the anode body. In the process of the chemical conversion treatment, the lead terminal and the anode body were immersed in the aqueous solution of boric acid with the liquid temperature of 85 °C and the concentration of 70 g/L, and current was applied at 10 mA for 1250 seconds.

The cathode body was a laminate of the cathode foil and a carbon layer. For the carbon layer, carbon black, styrene butadiene rubber (SBR) as a binder, and a sodium carboxymethyl cellulose (CMC-Na) aqueous solution as an aqueous solution containing dispersants were mixed and kneaded at the composition ratio of 84:6:10 to produce a slurry.

This slurry was uniformly applied on the cathode foil. Then, the slurry was heated and dried to volatilize the solvent. Press-processing was further performed on the cathode body. In the press-processing, the cathode body was sandwiched by a press roller, and the press linear pressure of 5.38 kN/cm was applied to fix the carbon layer on the cathode foil. The press linear pressure was applied using a press machine manufactured by TAKUMI GIKEN. The diameter of the press roller was 180 mm, the press-processing width was 130 mm, and the cathode body was transported once at 3 m/min.

The anode body was sandwiched by two cathode bodies via separators to produce a laminate. A 5 cm × 4 cm kraft-type separator was used as a separator. Note that, before the lamination, the back surface of the cathode body, which was the surface of the cathode body opposite the surface facing the anode bodies via the separator, was covered by an insulating resin.

The laminate of the anode bodies, the cathode body, and the separator was impregnated with the electrolytic solution. Ethylene glycol and moisture as a solvent and azelaic acid salt as a solute were added to prepare the electrolytic solution. After impregnating the electrolytic solution, the laminate of the anode bodies, the cathode body, and the separator was sealed by laminate material. The lead terminals connected to the anode body and the cathode body were drawn out of the laminate material. Accordingly, the electrolytic capacitors of the laminated cell according to Examples 1 and 2 and Comparative Examples 1 and 2 were produced. Aluminum laminate material with the thickness of 110 µm was used.

The V-I characteristic of the anode body was measured as follows. That is, the anode body was cut out into a piece of 3 cm × 4 cm. The anode body which had been cut out was masked by a polyimide tape so as to cover the cut surface. Furthermore, to prevent a measurement solution to enter the cut anode body from an end of the polyimide tape, silicone sealing material was applied on the end of the polyimide tape. The exposed area of the anode body was 2 cm × 2cm by the silicone sealing material.

Then, the anode body was immersed in a Vt measurement solution with the measurement tank SUS304 as a counter electrode. With an ammeter and a voltmeter connected, DC voltage was applied while sweeping DC voltage. The Vt measurement solution was the aqueous solution of boric acid with the liquid temperature of 85 °C and the concentration of 70 g/L. After the anode body was immersed in the Vt measurement solution, current with the current density of 0.4 mA/cm² was applied for 1250 seconds so that the accumulated charge became 0.5 C/cm², and then the measurement of the V-I characteristic was started. After the measurement had been started, the current density for each voltage was measured while increasing the voltage by one-sixtieth of the final voltage that was 375 V. Note that, each of the voltage was maintained for 20 seconds so that the charging current to the anode body did not affect the measurement value, and the current density at the end point was used as the measurement value.

Fig. 1 illustrates the measurement result. As illustrated in the measurement result in Fig. 1, the voltage at the boundary of the electron current region Ee that was the first voltage range and the ion current region Ei that was the second voltage range in the V-I characteristic of the anode body was 309 V.

Furthermore, the polarization curve of the cathode body was measured as follows. That is, the polarization curve was measured using a three-electrode cell. The cathode body and the reference cathode foil which had been cut into pieces of 2 × 5 cm were used as working electrodes, a silver-silver chloride electrode was used as a reference electrode, a SUS304 stainless mesh was used as a counter electrode, and these electrodes were immersed in the electrolytic solution. The concentration of the dissolved oxygen in the electrolytic solution was adjusted in a range of 0.4 to 1.0 mgL⁻¹. Each electrode was connected to a potentiostat, and after natural immersion potential became stable, said natural immersion potential was measured. After natural immersion potential became stable, the potential was polarized in the negative direction down to -1.7 V by the increment of 50 mV. Each potential was maintained at 50 mV for 10 minutes, and the average current in the last one minute was measured.

Fig. 2 is a graph illustrating the polarization curve of the cathode body. As illustrated in Fig. 2, the polarization curve of cathode body had an approximately S-shaped profile, and had an E₂A region that was a first potential range in which the reduction of dissolved oxygen was active and dominant, an AB region in which the current had reached the diffusion limit current of the dissolved oxygen, and a BC region that was a second potential range in which the ratio of the reduction reaction of hydrogen ions was increased compared with the E₂A region.

Furthermore, electrolytic capacitors of Comparative Examples 3 to 6 were produced. The electrolytic capacitors of Comparative Examples 3 to 6 were different from Examples 1 and 2 and Comparative Examples 1 and 2 in that the cathode bodies did not have the carbon layer laminated. The electrolytic capacitors of Examples 1 and 2 and Comparative Examples 1 to 6 were produced with the same configuration, the same composition, the same manufacturing method, and the same manufacturing condition except for said different point of the cathode body.

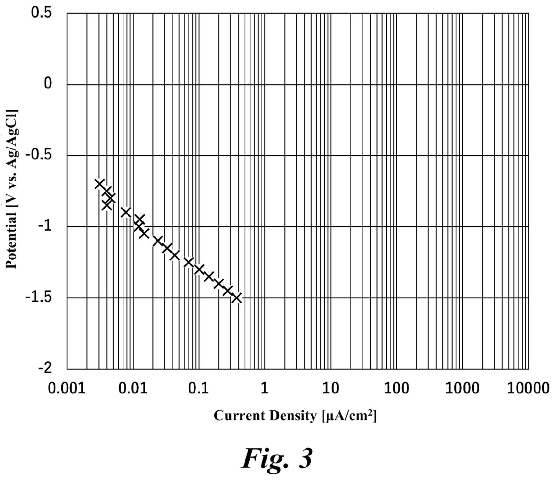

The polarization curve of the cathode body of Comparative Examples 3 to 6 was measured with the same measurement method and the same measurement condition of Comparative Examples 1 and 2. The measurement results are shown in Fig. 3. As illustrated in Fig. 3, the polarization curve of the cathode body with aluminum only did not exhibit a S-shape. Also, the potential range (vs. Ag/AgCl) appeared in the polarization curve was not a potential range in in which the dissolved oxygen was reduced, but was a potential rang in in which hydrogen ions was reduced. Therefore, it was observed that, there was no E₂A region that was the first potential range in which the reduction of dissolved oxygen was active and dominant, and the reduction reaction of hydrogen ions was occurring in all regions of the polarization curve, meaning that there was no region in which the reduction reaction of dissolved oxygen was dominant over the reduction reaction of hydrogen ions.

The rated voltage set for each electrolytic capacitors of Examples 1 and 2 and Comparative Examples 1 and 6 was applied under the temperature environment of 85 °C until the total charge reached the same value. Then, after the voltage was applied until the total charge reached the same value, the generation amount of hydrogen ions was measured for each electrolytic capacitor.

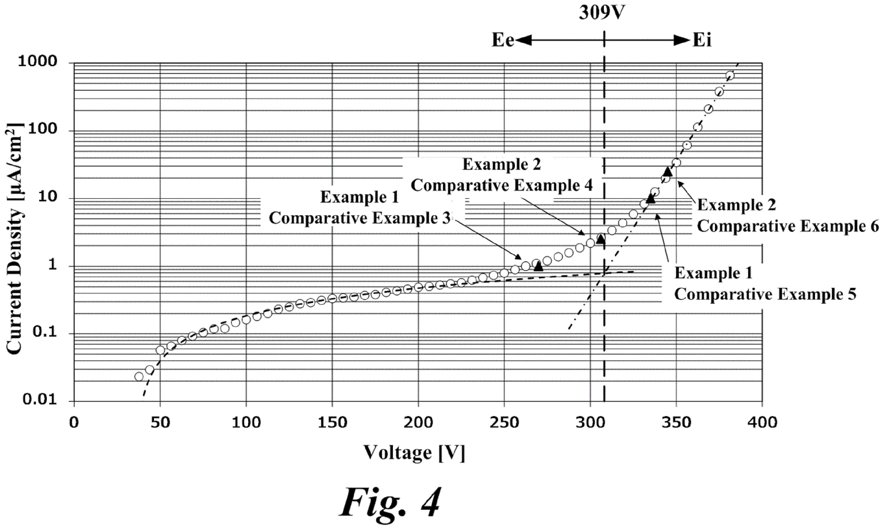

Firstly, the applied rated voltage set for each electrolytic capacitor of Examples 1 and 2 and Comparative Examples 1 and 6 is shown in a graph of Fig. 4 illustrating the V-I characteristic of the anode body. As illustrated in Fig. 4, the rated voltage of 270 V was applied to the electrolytic capacitors of Examples 1 and Comparative Example 3. The rated voltage of 306 V was applied to the electrolytic capacitors of Examples 2 and Comparative Example 4. As illustrated in Fig. 4, the voltage at the boundary of the electron current region Ee that was the first voltage range and the ion current region Ei that was the second voltage region in the V-I characteristic of the anode body was 309 V. Therefore, in Examples 1 and 2 and Comparative Examples 3 and 4, the rated voltage fell within the electron current region Ee that was the first potential range.

In contrast, as illustrated in Fig. 4, the rated voltage of 335 V was applied to the electrolytic capacitors of Comparative Examples 1 to 5. The rated voltage of 345 V was applied to the electrolytic capacitors of Comparative Examples 2 and 6. Therefore, in Comparative Examples 1, 2, 5 and 6, the rated voltage fell outside the electron current region Ee that was the first potential range.

The total charge conducted to the electrolytic capacitors of Examples 1 and 2 and Comparative Examples 1 to 6 was set to 12 C. Since the applied voltage set for each electrolytic capacitor was different, in Example 1 and Comparative Example 3 in which the rated voltage was 270 V, the current with the current density of 1.0 µA/cm² was applied for 277.8 hours to achieve the total current of 12 C. In Example 2 and Comparative Example 4 in which the rated voltage was 306 V, the current with the current density of 2.5 µA/cm² was applied for 111.1 hours to achieve the total current of 12 C. In Comparative Examples 1 and 5 in which the rated voltage was 335 V, the current with the current density of 10 µA/cm² was applied for 27.8 hours to achieve the total current of 12 C. In Comparative Examples 2 and 6 in which the rated voltage was 345 V, the current with the current density of 25 µA/cm² was applied for 11.1 hours to achieve the total current of 12 C.

The generation amount of hydrogen gas was measured using the change in volume of the laminated cell. The change in volume of the electrolytic capacitor was measured using Alchimedes' principle. That is, by measuring the change in weight of the water when the electrolytic capacitor was immersed in said water, the volume of the liquid removed by the laminate cell was determined as the generation amount of hydrogen gas. Note that, when measuring the volume, the electrolytic capacitor was left in a room at the temperature of 25 °C to cool the electrolytic capacitor down to the room temperature, and the electrolytic capacitor was submerged in very shallow water with the temperature of 25 °C for measurement.

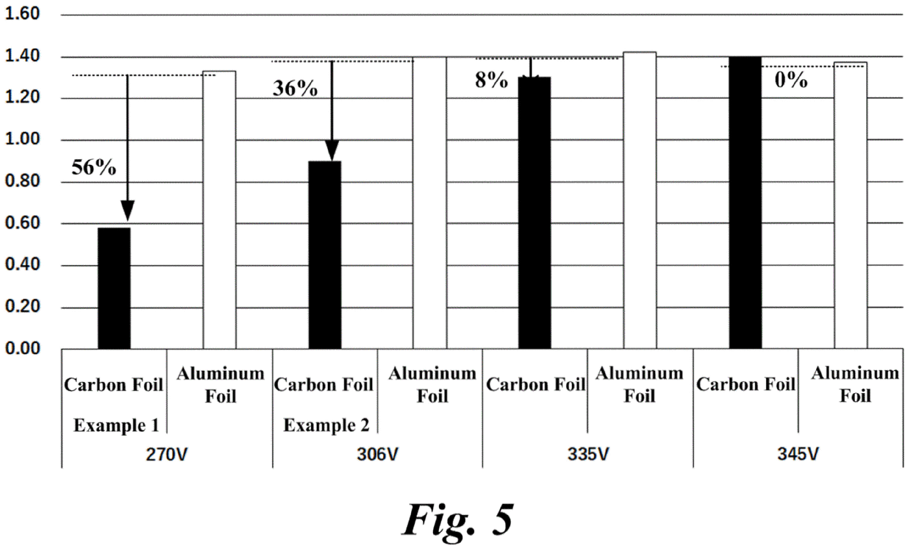

The measurement result of the generation amount of hydrogen gas is shown in Table 1 below. Furthermore, Fig. 5 is a bar graph which summarizes the result of Table 1. In Fig. 5, the carbon foil indicates the cathode body with the carbon layer laminated, and the aluminum foil indicates the cathode body without the carbon layer laminated.

**[Table 1]**

| | **Boundary Voltage of Anode Body Between Electron Current Voltage Ee and Ion Current Voltage Ei** | **Cathode Body** | **Rated Voltage** | **Change in Volume** | **Suppression Ratio of Hydrogen Gas Generation** |
|---|---|---|---|---|---|
| **Example 1** | | **With Carbon Layer** | **270 V** | **0.85 ml** | **56 %** |
| **Comparative Example 3** | | **Only Aluminum Foil** | | **1.33 ml** | |
| **Example 2** | | **With Carbon Layer** | **306 V** | **0.90 ml** | **36 %** |
| **Comparative Example 4** | **309 V** | **Only Aluminum Foil** | | **1.40 ml** | |
| **Comparative Example 1** | | **With Carbon Layer** | **335 V** | **1.30 ml** | **8.5 %** |
| **Comparative Example 5** | | **Only Aluminum Foil** | | **1.42 ml** | |
| **Comparative Example 2** | | **With Carbon Layer** | **345 V** | **1.40 ml** | **0 %** |
| **Comparative Example 6** | | **Only Aluminum Foil** | | **1.37 ml** | |

As shown in above Table 1 and Fig. 5, the generation amount of hydrogen gas in Example 1 was suppressed to 56 % compared with Comparative Example 3. Furthermore, the generation amount of hydrogen gas in Example 2 was suppressed to 36 % compared with Comparative Example 4. However, the generation amount of hydrogen gas in Comparative Example 1 was not so suppressed compared with Comparative Example 5, and the generation amount of hydrogen gas in Comparative Example 1 did not almost change compared with Comparative Example 6.

It was observed that, the cathode bodies of Comparative Examples 1 and 2 had the carbon layer laminated and the polarization curve of said cathode bodies appeared in the first potential range in which the reduction of dissolved oxygen was active and dominant. Therefore, at the cathode side in Comparative Examples 1 and 2, if sufficient amount of the dissolved oxygen was present in the electrolytic solution, the current density range of leakage current and the first potential range in which the reduction of dissolved oxygen occur should correspond, and the generation of hydrogen gas should be suppressed. However, the generation amount of hydrogen gas in Comparative Examples 1, 2, 5 and 6 was almost the same. Comparative Examples 5 and 6 had the cathode bodies with aluminum foil only, and in the polarization curve of the cathode bodies, the current density rang of leakage current and the potential at which the reduction reaction of hydrogen ions had occurred corresponded.

Accordingly, it was observed that, in the electrolytic capacitors of Comparative Examples 1 and 2, since sufficient amount of the dissolved oxygen was not present in the electrolytic solution, although the cathode body had the carbon layer laminated and the polarization curve of the cathode body was within the first potential range in which the reduction of dissolved oxygen was active and dominant, the diffusion limit current of the dissolved oxygen decreased and the reduction reaction of dissolved oxygen became less active, such that the current density rang of leakage current and the potential at which the reduction reaction of hydrogen ions had occurred corresponded, generating hydrogen gas.

In contrast, the cathode bodies of Examples 1 and 2 were the same as the cathode bodies of Comparative Examples 1 and 2. That is, it was observed that, the cathode bodies of the Examples 1 and 2 had the carbon layer laminated and the polarization curve of said cathode bodies appeared in the first potential range in which the reduction of dissolved oxygen was active and dominant. Examples 1 and 2 were different from Comparative Examples 1 and 2 in that the rated voltage applied to each electrolytic capacitor fell within the first voltage range that was the electron current region Ee in the V-I characteristic of the anode body. Due to this difference, it can be seen that the generation amount of hydrogen gas within the electrolytic capacitors of Examples 1 and 2 was suppressed compared with Comparative Examples 3 and 4.

Accordingly, due to this difference, in Examples 1 and 2, it can be seen that, since oxygen generated at the anode side was dissolved and the dissolved oxygen was continuously supplied within the electrolytic solution, the dissolved oxygen did not deplete at the cathode side and the reduction reaction of dissolved oxygen was maintained, making it difficult for the reduction reaction of hydrogen ions to occur, suppressing the generation of hydrogen gas.

That is, it was observed that the generation of hydrogen gas within the electrolytic capacitor could be excellently suppressed when the V-I characteristic of the anode body had the first voltage range in which the current density proportionally increased as the voltage increases and the second voltage range in which the current density exponentially increased as the voltage increased, the rated voltage fell within the first voltage range, the cathode body had the carbon layer, the polarization curve of the cathode body by electrochemical polarization had the first potential range in which the reduction of dissolved oxygen was dominant and the second potential range in which the ratio of the reduction reaction of hydrogen ions was higher than the first potential range, and the potential of the cathode body in the current density range of leakage current fell within the first potential range.

### (Examples 3 to 6)

Furthermore, electrolytic capacitors of Examples 3 to 6 and Comparative Examples 7 to 12 were produced. The dielectric film of 558 V was formed on the anode bodies incorporated in the electrolytic capacitors of Examples 3 to 6 and Comparative Examples 7 to 12 by chemical conversion treatment. When the V-I characteristic of the anode body was measured by the same measurement method and condition as Examples 1 and 2 and Comparative Examples 1 to 6, the voltage at the boundary of the electron current region Ee that was the first voltage range and the ion current region Ei that was the second voltage region was 476 V.

The cathode bodies used in Examples 1 and 2 and Comparative Examples 1 to 6 were incorporated in Examples 3 to 6 and Comparative Examples 8. That is, the cathode body which had been formed by the laminate of the cathode foil and the carbon layer and which had the polarization curve of an approximately S-shaped profile as illustrated in Fig. 2 was incorporated in the electrolytic capacitors of Examples 3 to 6 and Comparative Examples 8.

Also, the cathode body which had been used in Comparative Examples 3 to 6 was incorporated in the electrolytic capacitors of Comparative Examples 7 and 9 to 12. That is, the cathode body without the carbon layer laminated and with the polarization curve which had not exhibited an approximately S-shaped profile as illustrated in Fig. 3 was incorporated in the electrolytic capacitors of Comparative Examples 7 and 9 to 12.

Then, the electrolytic capacitors of Examples 3 to 6 and Comparative Examples 7 to 12 were produced by adjusting the composition ratio of the electrolytic solution so that the amount of the moisture in the total liquid content in the capacitor (moisture in element) varies. Firstly, the amount of moisture that had been contaminated during manufacturing of the electrolytic capacitor was measured. Then, the moisture in the amount obtained by subtracting the moisture that had been contaminated during manufacturing of the electrolytic capacitor from the target value of the amount of the moisture within the element, and said amount of the moisture was contained in the electrolytic solution when preparing the electrolytic solution.

Other configurations of the electrolytic capacitors of Examples 3 to 6 and Comparative Examples 7 to 12 were the same as the electrolytic capacitors of Examples 1 and 2 and Comparative Examples 1 to 6, and other processes and conditions in the method of manufacturing the electrolytic capacitors of Examples 3 to 6 and Comparative Examples 7 to 12 were the same as the electrolytic capacitors of Examples 1 and 2 and Comparative Examples 1 to 6.

The type of the cathode body and the amount of the moisture within the element in the electrolytic capacitors of Examples 3 to 6 and Comparative Examples 7 to 12 were shown in Table 2 below.

**[Table 2]**

| | **Cathode Body** | **Amount of Moisture within Element** |
|---|---|---|
| **Comparative Example 7** | **Only Aluminum Foil** | **1.0 wt%** |
| **Comparative Example 8** | **With Carbon Layer** | **1.0 wt%** |
| **Comparative Example 9** | **Only Aluminum Foil** | **1.49 wt%** |
| **Example 3** | **With Carbon Layer** | **1.49 wt%** |
| **Comparative Example 10** | **Only Aluminum Foil** | **2.2 wt%** |
| **Example 4** | **With Carbon Layer** | **2.2 wt%** |
| **Comparative Example 11** | **Only Aluminum Foil** | **3.1 wt%** |
| **Example 5** | **With Carbon Layer** | **3.1 wt%** |
| **Comparative Example 12** | **Only Aluminum Foil** | **5.1 wt%** |
| **Example 6** | **With Carbon Layer** | **5.1 wt%** |

As shown in the amount of the moisture within the element in above Table 2, in Examples 3 to 6 and Comparative Examples 7 to 12, the amount of the moisture in the total liquid content within the element varied between 1.0 wt% and 5.1 wt%. In other words, the moisture that acted as the supply source of the dissolved oxygen by the electrolysis indicated by the chemical reaction formula (4) was supplied in the element in the amount of 1.0 wt% to 5.1 wt% of the total liquid content within the element.

Same voltage was applied on each electrolytic capacitor of Examples 3 to 6 and Comparative Examples 7 to 12. The applied voltage was 409 V which was less than the voltage of 476 V at the boundary of the electron current region Ee that was the first voltage range and the ion current region Ei that was the second voltage range. That is, the voltage applied on the electrolytic capacitors of Examples 3 to 6 and Comparative Examples 7 to 12 fell within the electron current region Ee that was the first voltage range. The voltage was continuously applied under the temperature environment of 85 °C for 425 hours.

Then, the increase in volume (ml) of the electrolytic capacitors of Examples 3 to 6 and Comparative Examples 7 to 12 was measured using Archimedes' principle. When measuring the volume, the electrolytic capacitor was left in a room at the temperature of 25 °C to cool the electrolytic capacitor down to the room temperature, and the electrolytic capacitor was submerged in very shallow water with the temperature of 25 °C for measurement.

Furthermore, the total charge of each electrolytic capacitor was calculated, and a value (ml/C) was calculated by dividing the increase in volume that had been measured using Archimedes' principle by the total charge of each electrolytic capacitor. Accordingly, the increase in volume (ml/C) per unit electric charge was obtained.

The increase in volume is regarded as the generation amount of hydrogen gas generated by this application of voltage. The generation amount of hydrogen gas is shown in Table 3 below. Table 3 shows the increase in volume (ml/C) per unit electric charge.

**[Table 3]**

| | **Cathode Body** | **Amount of Moisture within Element** | **Increase in Volume (mL/C)** | **Ratio Relative to Theoretical Value (0.126 mL/C)** |
|---|---|---|---|---|
| **Comparative Example 7** | **Only Aluminum Foil** | **1.0 wt%** | **0.188** | **149 %** |
| **Comparative Example 8** | **With Carbon Layer** | **1.0 wt%** | **0.176** | **139 %** |
| **Comparative Example 9** | **Only Aluminum Foil** | **1.49 wt%** | **0.103** | **81 %** |
| **Example 3** | **With Carbon Layer** | **1.49 wt%** | **0.058** | **45 %** |
| **Comparative Example 10** | **Only Aluminum Foil** | **2.2 wt%** | **0.127** | **100 %** |
| **Example 4** | **With Carbon Layer** | **2.2 wt%** | **0.077** | **61 %** |
| **Comparative Example 11** | **Only Aluminum Foil** | **3.1 wt%** | **0.135** | **107 %** |
| **Example 5** | **With Carbon Layer** | **3.1 wt%** | **0.063** | **49 %** |
| **Comparative Example 12** | **Only Aluminum Foil** | **5.1 wt%** | **0.138** | **109 %** |
| **Example 6** | **With Carbon Layer** | **5.1 wt%** | **0.072** | **57 %** |

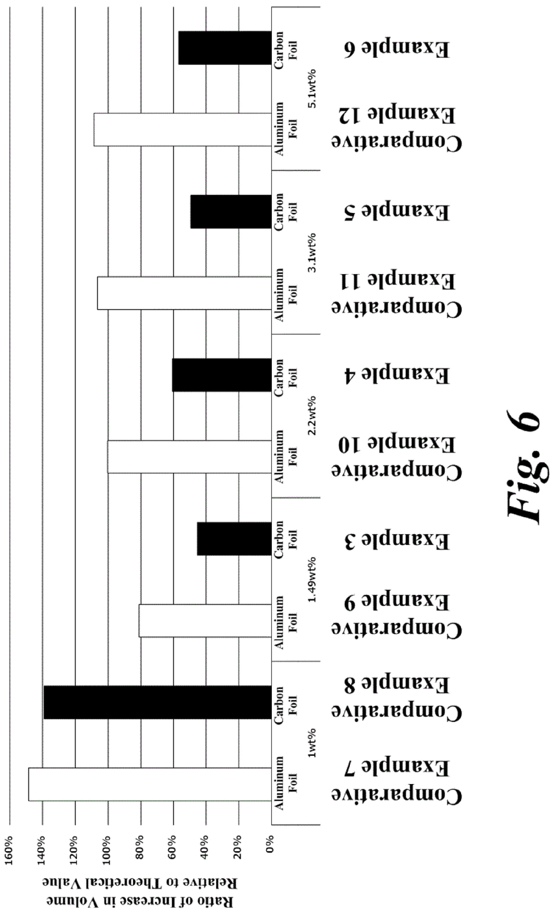

Above Table 3 shows the ratio of the increase in volume relative to the theoretical value. Assume that the reduction reaction of dissolved oxygen is not dominant and the reduction reaction of hydrogen ions is dominant. At this time, 1 mol of hydrogen gas (H₂) is generated from 2 mol of hydrogen ions (H⁺) and 2 mol of electrons (e⁻). According to Charles' Law, the ideal volume of 1 mol of hydrogen gas is 24451.28 mL under the environment of one atm and 25 °C. Furthermore, the amount of charge of 2 mol of electrons is 192944.9 C obtained by multiplying the elementary charge e by Avogadro's number and the number of moles. Therefore, the theoretical value of the increase in volume of the electrolytic capacitor per 1 coulomb due to the generation of hydrogen gas is 0.126 mL/C obtained by dividing the ideal volume of 1 mol of hydrogen gas by the amount of charge of 2 mol of electrons. In Table 3, the percentage of the increase in volume relative to the theoretical value that is 0.126 mL/C is shown as the ratio relative to the theoretical value. Fig. 6 is a bar graph illustrating the ratio of the increase in volume relative to the theoretical value.

As shown in Table 3 and Fig. 6, the increase in volume in Comparative Examples 7 and 8 in which the amount of the moisture within the element was 1.0 wt% was higher than Examples 3 to 6 and Comparative Examples 9 to 12 in which the amount of the moisture within the element was 1.49 wt% or more. It can be seen that, in the electrolytic capacitors of Comparative Examples 7 and 8 in which the amount of the moisture within the element was 1.0 wt%, the reduction reaction of dissolved oxygen was not dominant, and the generation amount of hydrogen gas which was significantly larger than the theoretical value of the generation amount of hydrogen gas that was 0.126 mL/C was generated when assuming that the reduction reaction of hydrogen ions was dominant.

In contrast, as illustrated in Table 3 and Fig. 6, in Comparative Examples 9 to 12 in which the amount of the moisture within the element was 1.49 wt% or more, the increase in volume decreased compared with Comparative Examples 7 and 8 in which the amount of the moisture within the element was less than 1.49 wt%. However, in almost cases, the ratio relative to the theoretical value exceeded 100 %.

This result confirmed that following phenomena had occurred. That is, due to the defects repairing action of the dielectric film by the moisture, the generation amount of hydrogen gas in Comparative Examples 9 to 12 was suppressed compared with Comparative Examples 7 and 8. However, in the electrolytic capacitors of Comparative Examples 9 to 12 in which the polarization curve of the cathode body did not have an approximately S-shaped profile with the E2A region that was the first potential range in which the reduction of dissolved oxygen was active and dominant, the reduction reaction of dissolved oxygen was not dominant and the reduction reaction of hydrogen ions was dominant.

In contrast, as illustrated in Table 3 and Fig. 6, in Examples 3 to 6, the increase in volume decreased compared with other Comparative Examples. Also, the ratio of the increase in volume relative to the theoretical value in Examples 3 to 6 was significantly lower than 100 % and was about 60 % at maximum and in the 40 % range in good samples.

The difference between Examples 3 to 6 and Comparative Examples 9 to 12 was the cathode body. The cathode body of Examples 3 to 6 had the polarization curve with an approximately S-shaped profile including the E2A region that was the first potential range in which the reduction of dissolved oxygen was active and dominant.

However, also in Comparative Example 8, the V-I characteristic of the anode body had the first voltage range in which the current density proportionally increased as the voltage increased and the second voltage range in which the current density exponentially increased as the voltage increased, the rated voltage fell within the first voltage range, the cathode body had the carbon layer, the polarization curve of the cathode body by electrochemical polarization had the first potential range in which the reduction of dissolved oxygen was dominant and the second potential range in which the ratio of the reduction reaction of hydrogen ions was higher than the first potential range, and the potential of the cathode body in the current density range of leakage current fell within the first potential range.

However, as illustrated in Table 3 and Fig. 6, the ratio of the increase in volume relative to the theoretical value in Comparative Examples 8 was higher than the electrolytic capacitors of Comparative Examples 9 to 12 in which the polarization curve of the cathode body did not have an approximately S-shaped profile with the E2A region that was the first potential range in which the reduction of dissolved oxygen was active and dominant.

In Examples 3 to 6, the amount of the moisture within the element was 1.49 wt% or more, unlike Comparative Example 8. It can be seen that the group of Examples 3 to 6 were significantly different from Comparative Example 8 in the increase in volume due to the amount of the moisture within the element. That is, it can be seen that, in Examples 3 to 6, since the amount of the moisture with in the element was 1.49 wt% or more, the dissolved oxygen was sufficiently supplied so that the reduction reaction of dissolved oxygen was dominant relative to the reduction reaction of hydrogen ions, suppressing the generation of hydrogen gas to be significantly lower than the theoretical value.

In other words, it can be seen that, in Comparative Example 8, even though the V-I characteristic of the anode body had the first voltage range in which the current density proportionally increased as the voltage increased and the second voltage range in which the current density exponentially increased as the voltage increased, the rated voltage fell within the first voltage range, the cathode body had the carbon layer, the polarization curve of the cathode body by electrochemical polarization had the first potential range in which the reduction of dissolved oxygen was dominant and the second potential range in which the ratio of the reduction reaction of hydrogen ions was higher than the first potential range, and the potential of the cathode body in the current density range of leakage current fell within the first potential range, the mechanism did not work because the dissolved oxygen was not supplied enough.

Accordingly, it was observed that the generation of hydrogen gas in the electrolytic capacitor can be excellently suppressed firstly when the V-I characteristic of the anode body had the first voltage range in which the current density proportionally increased as the voltage increased and the second voltage range in which the current density exponentially increased as the voltage increased, and the rated voltage fell within the first voltage range, secondly when the cathode body had the carbon layer, the polarization curve of the cathode body by electrochemical polarization had the first potential range in which the reduction of dissolved oxygen was dominant and the second potential range in which the ratio of the reduction reaction of hydrogen ions was higher than the first potential range, and the potential of the cathode body in the current density range of leakage current fell within the first potential range, and thirdly when the amount of the moisture was 1.49 wt% or more of the total liquid content within the element including the electrolytic solution.

### (Example 7)

Furthermore, electrolytic capacitors of Example 7 and Comparative Example 13 were produced. The electrolytic capacitors of Example 7 and the Comparative Example 13 included a powder laminated foil as an anode body. The powder laminated foil was produced by laminating and sintering aluminum powder on an aluminum foil. The dielectric film of 640 V was formed on the anode body by the same chemical conversion treatment as Example 1. When the V-I characteristic of the anode body was measured by the same measurement method and condition as Examples 1 and 2 and Comparative Examples 1 to 6, the voltage at the boundary of the electron current region Ee that was the first voltage range and the ion current region Ei that was the second voltage region was 571 V.

The cathode body used in Examples 1 and 2 and Comparative Examples 1 to 2 was incorporated in the electrolytic capacitor of Example 7. That is, the cathode body formed by the laminate of the cathode foil and the carbon layer and having the polarization with an approximately S-shaped profile as illustrated in Fig. 2 was incorporated in the electrolytic capacitor of Example 7. The cathode body which had been used in Comparative Examples 3 to 6 was incorporated in the electrolytic capacitor of Comparative Example 13. That is, the cathode body without the carbon layer laminated and having the polarization curve without an S-shaped profile as illustrated in Fig. 3 was incorporated in the electrolytic capacitors of Comparative Examples 13.

In Example 7 and Comparative Example 13, the electrolytic solution was produced so that the amount of the moisture within the element was adjusted to 5.1 wt %.

Other configurations of the electrolytic capacitors of Example 7 and Comparative Example 13 were the same as the electrolytic capacitors of Examples 1 and 2 and Comparative Examples 1 to 6, and other processes and conditions in the manufacturing method of the electrolytic capacitors of Example 7 and Comparative Example 13 were the same as the electrolytic capacitors of Examples 1 and 2 and Comparative Examples 1 to 6.

Same voltage was applied on each electrolytic capacitor of Example 7 and Comparative Example 13. The applied voltage was 460 V which was less than the voltage of 571 V at the boundary of the electron current region Ee that was the first voltage range and the ion current region Ei that was the second voltage range. That is, the voltage applied to the electrolytic capacitors of Example 7 and Comparative Example 13 fell within the electron current region Ee that was the first voltage range. The voltage was continuously applied under the temperature environment of 105 °C for 500 hours.

Then, the increase in volume (ml) of the electrolytic capacitors of Example 7 and Comparative Example 13 was measured using Archimedes' principle. Furthermore, the total charge of each electrolytic capacitor was calculated, and a value (ml/C) was calculated by dividing the increase in volume that had been measured using Alchimedes' principle by the total charge of each electrolytic capacitor. Accordingly, the increase in volume (ml/C) per unit electric charge was obtained.

The increase in volume is regarded as the generation amount of hydrogen gas generated by this application of voltage. The generation amount of hydrogen gas is shown in Table 4 below. Table 4 shows the increase in volume (ml/C) per unit electric charge.

**[Table 4]**

| | **Example 7** | **Comparative Example 13** |
|---|---|---|
| **Anode Body** | **Powder Laminated Foil** | **Powder Laminated Foil** |
| **Cathode Body** | **With Carbon Layer** | **Only Aluminum Foil** |
| **Amount of Moisture within Element** | **5.1 wt%** | **5.1 wt%** |
| **Increase in Volume (mL/C)** | **0.083** | **0.139** |
| **Ratio Relative to Theoretical Value (0.126 mL/C)** | **69 %** | **110 %** |

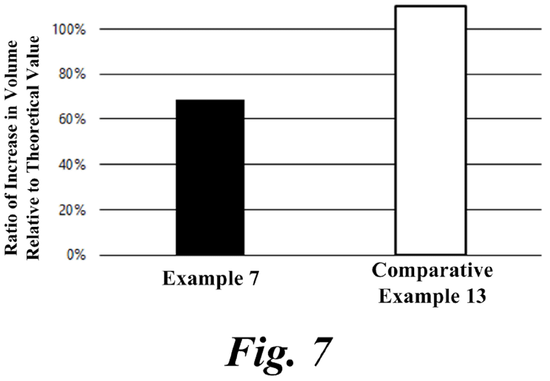

Fig. 7 is a bar graph illustrating the ratio of the increase in volume relative to the theoretical value in Table 4. As illustrated in Table 4 and Fig.7, it was observed that, even when the anode body was the powder-laminate, the generation of hydrogen gas in the electrolytic capacitor could be excellently suppressed firstly when the V-I characteristic of the anode body had the first voltage range in which the current density proportionally increased as the voltage increased and the second voltage range in which the current density exponentially increased as the voltage increased, and the rated voltage fell within the first voltage range, secondly when the cathode body had the carbon layer, the polarization curve of the cathode body by electrochemical polarization had the first potential range in which the reduction of dissolved oxygen was dominant and the second potential range in which the ratio of the reduction reaction of hydrogen ions was higher than the first potential range, and the potential of the cathode body in the current density range of leakage current fell within the first potential range, and thirdly when the amount of the moisture was 1.49 wt% or more of the total liquid content within the element including the electrolytic solution.

## Claims

1. An electrolytic capacitor comprising:
an anode body formed of a valve metal and having a dielectric film;
a cathode body including a foil formed of a valve metal and a carbon layer on the foil;
an electrolytic solution interposed between the anode body and the cathode body;
an element including the anode body, the cathode body and the electrolytic solution; and
a moisture within the element,
wherein:
a V-I characteristic of the anode body has a first voltage range in which a current density proportionally increases as a voltage increases and a second voltage range in which a current density exponentially increases as a voltage increases,
in the V-I characteristic of the anode body, a rated voltage of the electrolytic capacitor is set within the first voltage range, and
an amount of the moisture is 1.49 wt% or more of a total liquid content within the element including the electrolytic solution.

2. The electrolytic capacitor according to claim 1, wherein:
a polarization curve of the cathode body resulting from an electrochemical polarization has a first potential range in which a reduction of a dissolved oxygen is dominant and a second potential range in which a ratio of a reduction reaction of a hydrogen ion is higher than the first potential range,
a potential of the cathode body is set within the first potential range in a current density range of leakage current of the electrolytic capacitor,
the first potential range in which the reduction of the dissolved oxygen is dominant is a range in which a current generated due to a cathode reaction reducing the dissolved oxygen in the electrolytic solution is larger than a current generated due to a cathode reaction reducing the hydrogen ion, and
the second potential range in which the ratio of the reduction reaction of the hydrogen ion is a range in which the current generated due to the cathode reaction reducing the hydrogen ion is larger than the current generated due to the cathode reaction reducing the dissolved oxygen.

3. The electrolytic capacitor according to claim 1, wherein:
the first voltage range in which the current density proportionally increases as the voltage increases is a range in which the moisture is electrolyzed on a surface of the anode body to supply a dissolved oxygen within the electrolytic solution, and
the second voltage range in which the current density exponentially increases as the voltage increases is a range in which the valve metal and the moisture react with each other to oxidize the valve metal and generate a hydrogen ion.

4. The electrolytic capacitor according to any one of claims 1 to 3, wherein the anode body includes a powder layer formed by laminating a powder of the valve metal.

5. A method of manufacturing an electrolytic capacitor comprising:
a formation process of forming a cathode body including a foil formed of a valve metal and a carbon layer on the foil;
a formation process of forming an anode body;
a process of preparing an electrolytic solution containing the moisture in an amount of 1.49 wt% or more of a total liquid content within an element including the anode body, the cathode body, and the electrolytic solution;
a process of interposing the electrolytic solution between the anode body and the cathode body; and
a process of setting a rated voltage of the electrolytic capacitor to a first voltage range among the first voltage range in which a current density proportionally increases as a voltage increases and a second voltage range in which a current density exponentially increases as a voltage increases.

6. The method of manufacturing the electrolytic capacitor according to claim 5, wherein the process of forming the anode body includes a process of forming a powder layer formed by laminating a powder of the valve metal.

7. A method of using an electrolytic capacitor, **characterized in that**:
the electrolytic capacitor includes:
an anode body formed of a valve metal and having a dielectric film;
a cathode body including a foil formed of a valve metal and a carbon layer on the foil;
an electrolytic solution interposed between the anode body and the cathode body;
an element including the anode body, a cathode body and the electrolytic solution; and
a moisture within the element,
a V-I characteristic of the anode body has a first voltage range in which a current density proportionally increases as a voltage increases and a second voltage range in which a current density exponentially increases as a voltage increases,
an amount of the moisture is 1.49 wt% or more of a total liquid content within the element including the electrolytic solution, and
the electrolytic capacitor is used within the first voltage range of the V-I characteristic of the anode body.

8. The method of using the electrolytic capacitor according to claim 7, wherein the anode body includes a powder layer formed by laminating a powder of the valve metal.
